# EUROPEAN PATENT APPLICATION

(11) **EP 4 015 838 A1**
(43) Date of publication of application: **22.06.2022**
(21) Application number: 20871315.6
(22) Date of filing: 07.09.2020
(51) Int. Cl.: F04D 29/58, F04D 17/10, F04D 29/056, F04D 29/058, H02K 7/09, H02K 9/19

(54) **TURBO COMPRESSOR**

(30) Priority: 30.09.2019 JP 2019179449
(71) Applicant: Daikin Industries, Ltd., Osaka-shi, Osaka 530-8323 (JP)
(72) Inventor: FUJIWARA, Hideki, Osaka-shi, Osaka 530-8323 (JP); OKADA, Kuuma, Osaka-shi, Osaka 530-8323 (JP)
(74) Representative: Goddar, Heinz J.
(86) International application number: PCT/JP2020/033815
(87) International publication number: WO 2021/065363

(57) **Abstract**

To cool a coil of an electric motor (20) of a turbo compressor (10) by a simple configuration, in the turbo compressor configured to be provided in a refrigerant circuit (70) in which a refrigeration cycle is performed and compress a refrigerant, a refrigerant passage (56) in which a refrigerant flows and a plurality of injection ports (57) through which a refrigerant is injected from the refrigerant passage (56) toward a coil end (24, 25) of the electric motor (20) are formed in a bearing holder (51, 52) that supports by a bearing (40) a drive shaft (26) coupled to an impeller (30) and the electric motor (20). The injection ports (57) are distributed in the circumferential direction of the bearing holder (51, 52).

## Description

### Technical Field

The present disclosure relates to a turbo compressor.

### Background Art

A turbo compressor that includes an impeller, an electric motor, and a drive shaft coupled to the impeller and the electric motor has been known. The electric motor may be provided with a cooling member that faces a coil end to cool a coil and configured to spray a coolant from the cooling member with respect to the coil end (refer to, for example, PTL 1).

### Citation List

### Patent Literature

PTL 1: Japanese Unexamined Patent Application Publication No. 2010-051130

### Summary of Invention

### Technical Problem

In PTL 1, a cooling member dedicated to cool a coil of an electric motor is provided, which tends to make the configuration complicated.

An object of the present disclosure is to cool a coil of an electric motor by a simple configuration in a turbo compressor.

### Solution to Problem

A first aspect of the present disclosure presupposes a turbo compressor including:
an impeller (30); an electric motor (20); a drive shaft (26) that is coupled to the impeller (30) and the electric motor (20); and at least one bearing holder (51, 52) that supports the drive shaft (26) via a first bearing (40),
the turbo compressor being configured to be provided in a refrigerant circuit (70) in which a refrigeration cycle is performed and compress a refrigerant.

The turbo compressor according to the first aspect is characterized in that
the bearing holder (51, 52) includes a refrigerant passage (56) through which a refrigerant flows, and a plurality of injection ports (57) through which a refrigerant is injected from the refrigerant passage (56) toward a coil end (24, 25) of the electric motor (20), and
the injection ports (57) are distributed in a circumferential direction of the bearing holder (51, 52).

In the first aspect, the refrigerant that flows in the refrigerant passage (56) is injected toward the coil end (24, 25) of the electric motor (20) through the plurality of injection ports (57) formed to be distributed in the circumferential direction of the bearing holder (51, 52). Due to the plurality of injection ports (57) being formed to be distributed in the circumferential direction, it is possible to spray the refrigerant onto the entirety of the coil end (24, 25) of the electric motor (20). Therefore, according to the first aspect, it is possible to cool the coil end (24, 25) uniformly by a simple configuration in which the plurality of injection ports (57) are merely formed in the bearing holder (51, 52) to be distributed in the circumferential direction.

A second aspect of the present disclosure is characterized in that,
in the first aspect,
the first bearing is a magnetic bearing (40).

In the second aspect, by forming the refrigerant passage (56) and the injection ports (57) in the bearing holder (51, 52) that holds the magnetic bearing (40), it is possible to cool the coil end (24, 25) of the electric motor (20) and also possible to cool the magnetic bearing (40) by the refrigerant that flows in the refrigerant passage (56).

A third aspect of the present disclosure is characterized in that,
in the second aspect,
a second bearing (80) that is an auxiliary bearing of the magnetic bearing (40) is further included, and
a branch passage (81) through which a refrigerant is supplied from the refrigerant passage (56) to the second bearing (80) is formed in the bearing holder (51, 52).

In the third aspect, the refrigerant that flows in the refrigerant passage (56) is sprayed onto the coil end (24, 25) of the electric motor (20) and also supplied to the second bearing (80) by being divided to the branch passage (81). Therefore, the coil end of the electric motor (20) and the second bearing (80) are cooled.

A fourth aspect of the present disclosure is characterized in that,
in any one of the first to third aspects,
the refrigerant passage (56) includes an annular passage (58) formed in an annular shape in the bearing holder (51, 52).

In the third aspect, the refrigerant flows in the annular passage (58). Thus, a configuration capable of uniformly cooling the coil end (24, 25) of the electric motor (20) can be easily realized. Moreover, it is possible to cool the entirety of the first bearing (40).

A fifth aspect of the present disclosure is characterized in that,
in any one of the first to fourth aspects,
the bearing holder (51, 52) includes a first bearing holder 51 on a side where the impeller (30) is disposed with respect to the electric motor (20), and a second bearing holder (52) on a side opposite to the first bearing holder (51) with respect to the electric motor (20), and
an injection amount of a refrigerant through the injection ports (57) of each of the bearing holders (51, 52) is adjustable individually.

In the fourth aspect, since it is possible to adjust the injection amount of the refrigerant through the injection ports (57) of each of the bearing holders (51, 52) individually, it is possible to cool only the coil end (24, 25) that has a high temperature. It is thus possible to cool the coil of the electric motor (20) efficiently.

A sixth aspect of the present disclosure is characterized in that,
in the fifth aspect,
an injection amount of a refrigerant through the injection ports (57) of the first bearing holder (51) is adjusted based on a first temperature of the electric motor (20),
an injection amount of a refrigerant through the injection ports (57) of the second bearing holder (52) is adjusted based on a second temperature of the electric motor (20), and
the first temperature and the second temperature are temperatures of mutually different parts of the electric motor (20).

In the sixth aspect, since the first temperature and the second temperature are the temperatures of mutually different parts of the electric motor (20), it is possible to properly adjust the amount of the refrigerant injected through the injection ports (57) of the first bearing holder (51) and the amount of the refrigerant injected through the injection ports (57) of the second bearing holder (52) on the basis of the temperatures of parts corresponding thereto. It is thus possible to cool the coil of the electric motor (20) efficiently.

### Brief Description of Drawings

[Fig. 1] Fig. 1 is a sectional view of a turbo compressor according to Embodiment 1 and illustrates a state in which refrigerant passages of bearing holders and a refrigerant circuit are connected together.
[Fig. 2] Fig. 2 is a view illustrating a flow of a refrigerant in a first cooling operation.
[Fig. 3] Fig. 3 is a view illustrating a flow of a refrigerant in a second cooling operation.
[Fig. 4] Fig. 4 is a perspective view of a bearing housing viewed from a motor side.
[Fig. 5] Fig. 5 is a perspective view of a bearing housing viewed from a side opposite to the motor side.
[Fig. 6] Fig. 6 is a perspective sectional view of a bearing housing.
[Fig. 7] Fig. 7 is a perspective sectional view of a state in which a magnetic bearing is mounted on a bearing housing.
[Fig. 8] Fig. 8 is a sectional view of a turbo compressor according to Embodiment 2 and illustrates a state in which refrigerant passages of bearing holders and a refrigerant circuit are connected together.

### Description of Embodiments

### <<Embodiment 1>>

Embodiment 1 will be described. A turbo compressor (10) according to Embodiment 1 is configured to be provided in a refrigerant circuit in which a vapor compression refrigeration cycle is performed and compresses a refrigerant. In the drawings, the right side (in other words, the side of an impeller (30)) is the "front side", and the left side is the "rear side".

### - Configuration of Turbo Compressor -

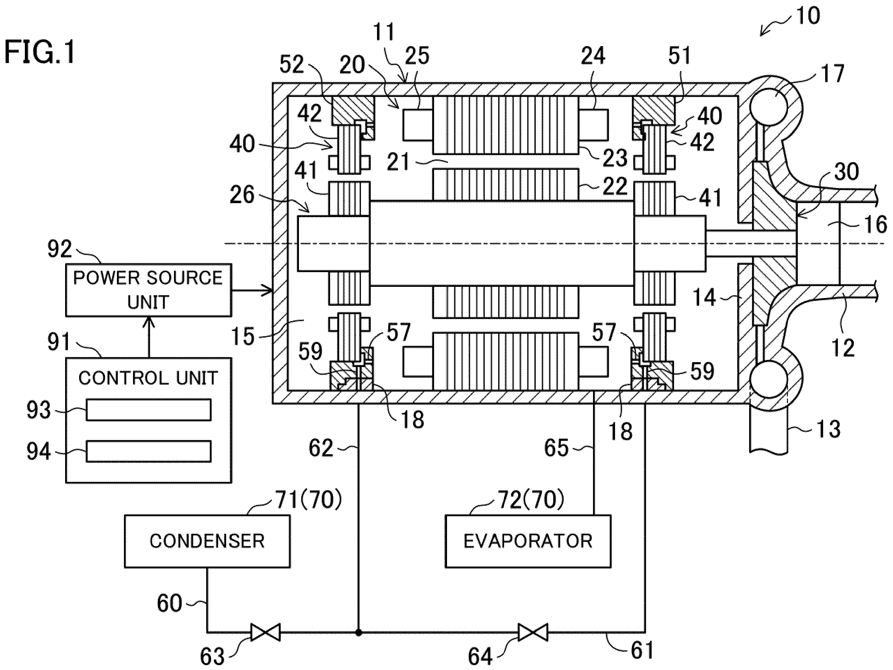

As illustrated in Fig. 1, the turbo compressor (10) includes a casing (11), an electric motor (20), the impeller (30), magnetic bearings (40) as first bearings, a control unit (91), and a power source unit (92). The magnetic bearings (40) are disposed one each on the front side and the rear side of the electric motor (20). The turbo compressor (10) further includes a drive shaft (26) coupled to the impeller (30) and the electric motor (20), and two bearing holders (51, 52) that support the drive shaft (26) via the magnetic bearings (40).

The casing (11) has a cylindrical shape having closed both ends and is disposed to have a cylinder axis in the horizontal direction. A space inside the casing (11) is partitioned by a wall portion (14). A space on the rear side of the wall portion (14) is a driving mechanism space (15) for housing the electric motor (20) and the magnetic bearings (40). A space on the front side of the wall portion (14) is an impeller space (16) for housing the impeller (30) .

### <Electric Motor>

The electric motor (20) includes a rotor (22) and a stator (23). The rotor (22) is fixed to the drive shaft (26) to be coaxial with the drive shaft (26). The rotor (22) is disposed such that the outer peripheral surface of the rotor (22) faces the inner peripheral surface of the stator (23) to be spaced from the inner peripheral surface by a predetermined distance with an air gap (21) interposed therebetween. The stator (23) is fixed to the inner peripheral surface of the casing (11). In Embodiment 1, the electric motor (20) is a so-called permanent magnet synchronous motor. The electric motor (20) is housed in the driving mechanism space (15) such that the direction of a shaft center (O) of the drive shaft (26) is in the horizontal direction.

In the following description, the "axial direction" denotes a shaft direction, in other words, the direction of the shaft center (O) of the drive shaft (26). The "radial direction" denotes a direction orthogonal to the axial direction of the drive shaft (26). The "outer peripheral side" denotes a side farther from the shaft center (O) of the drive shaft (26). The "inner peripheral side" denotes a side closer to the shaft center (O) of the drive shaft (26). The "circumferential direction" denotes a circumferential direction based on the shaft center (O) of the drive shaft (26) .

### <Impeller>

The impeller (30) has a substantially conical outer shape formed by a plurality of blades (not illustrated). In a state of being fixed to one end portion (a front end portion in this example) of the drive shaft (26) and being rotatable integrally with the drive shaft (26), the impeller (30) is housed in the impeller space (16). The casing (11) is provided with an intake pipe (12) and a discharge pipe (13) that are in communication with the impeller space (16). A compression space (17) is formed in an outer peripheral portion of the impeller space (16). The intake pipe (12) is provided to guide a gas refrigerant serving as a working fluid from an evaporator (72) of the refrigerant circuit into the impeller space (16). The discharge pipe (13) is provided to send out the gas refrigerant compressed in the impeller space (16) having a high-pressure to a condenser (radiator) (71) of the refrigerant circuit. A piping system of the refrigerant circuit is omitted in Fig. 1.

### <Magnetic Bearing>

The magnetic bearings (40) are configured to support, without contact, the drive shaft (26) by an electromagnetic force. In Embodiment 1, two magnetic bearings (40) are disposed to face each other with the electric motor (20) interposed therebetween in the axial direction. Each of the magnetic bearings (40) includes a rotor (41) fixed to the drive shaft (26) and a stator (42) disposed to be spaced from the rotor (41) by a predetermined distance.

The magnetic bearings each include a radial magnetic bearing and a thrust magnetic bearing. In Embodiment 1, only the radial magnetic bearing is illustrated.

In Embodiment 1, touchdown bearings (second bearings), which are auxiliary bearings that support the drive shaft (26) when a malfunction or the like of the magnetic bearings (40) has occurred, are omitted. The touchdown bearings will be described in Embodiment 2.

### <Bearing Holder>

The bearing holders (51, 52) include a first bearing holder (51) on the side where the impeller (30) is disposed with respect to the electric motor (20), in other words, on the front side, and a second bearing holder (52) on the side opposite to the first bearing holder (51) with respect to the electric motor (20), in other words, on the rear side. The first bearing holder (51) and the second bearing holder (52) are formed in mutually identical shapes.

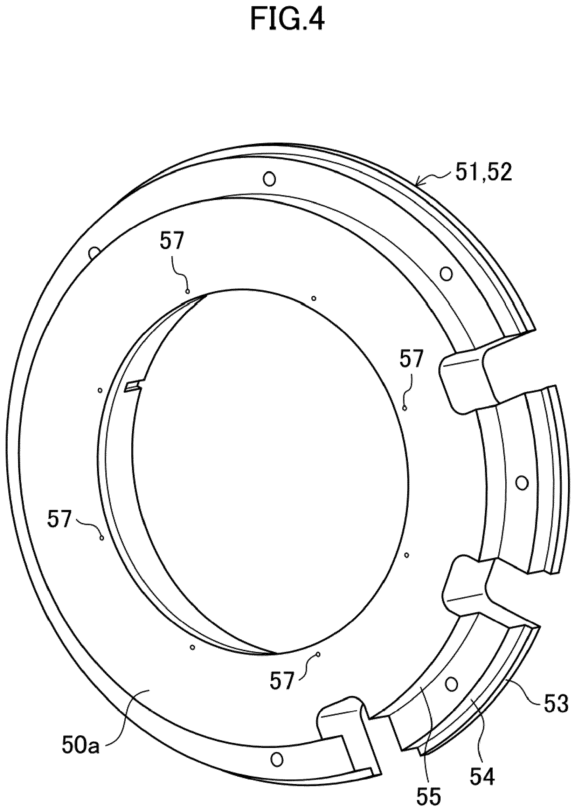

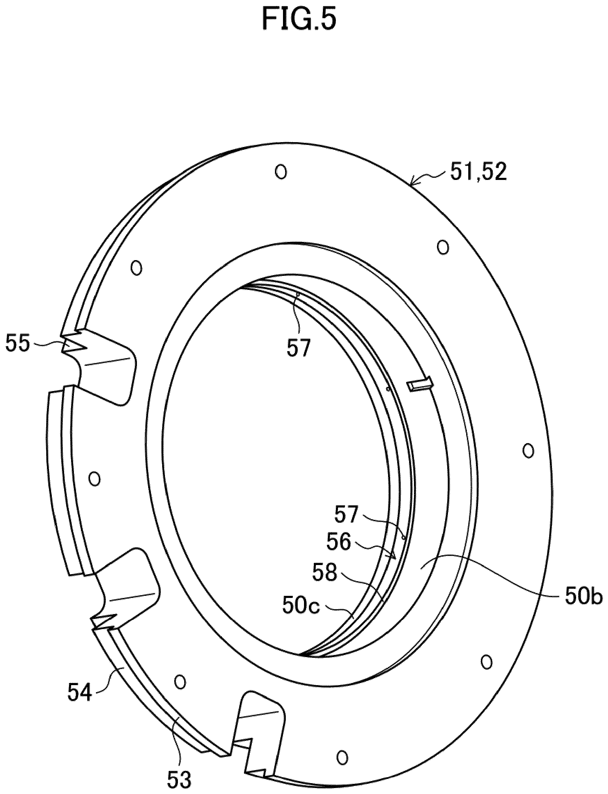

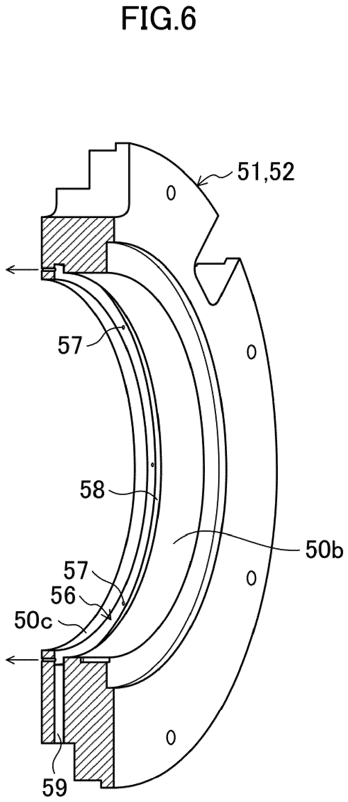

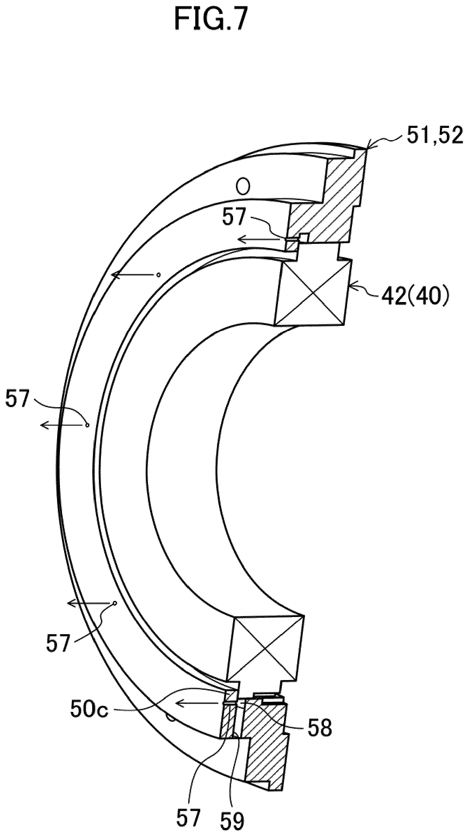

As illustrated in Fig. 4 to Fig. 7, each of the bearing holders (51, 52) is formed in an annular shape. The bearing holders (51, 52) each have a shape including a stepped outer peripheral surface and include a large diameter portion (53), an intermediate diameter portion (54), and a small diameter portion (55). The casing (11) is provided with a mount portion (18) having a shape corresponding thereto.

Each of the bearing holders (51, 52) includes a refrigerant passage (56) in which a refrigerant flows and a plurality of injection ports (57) through which the refrigerant is injected from the refrigerant passage (56) toward coil ends (24, 25) of the electric motor (20). Regarding the coil ends (24, 25), the coil end on the front side and the coil end on the rear side of the electric motor (20) are referred to as the first coil end (24) and the second coil end (25), respectively, in the following description.

The refrigerant passage (56) has an annular groove (annular passage) (58) formed in an annular shape at the inner peripheral surface corresponding to the small diameter portion (55) of the bearing holder (51, 52), and an introduction passage (59) passing through the small diameter portion (55) in the radial direction and in communication with the annular groove (58). The injection ports (57) extend in the axial direction by passing through a first side surface (50a), the first side surface (50a) being a side surface of the bearing holder (51, 52) on the motor side, and are in communication with the annular groove (58). Eight injection ports (57) are formed to be distributed at intervals of 45° in the circumferential direction of each of the bearing holders (51, 52). This angle may be changed, and the injection ports (57) may be not necessarily disposed at equal intervals.

Each bearing holder (51, 52) has a retainer portion (50c) that is on the inner peripheral side of the first side surface (50a) and that projects toward the inner side in the radial direction more than an engagement surface (50b) that engages with the magnetic bearing (40). The annular groove (58) is formed at a corner portion on the side of the retainer portion (50c).

The introduction passage (59) of the first bearing holder (51) and the introduction passage (59) of the second bearing holder (52) are connected in parallel to a condenser (71) of the refrigerant circuit by a main supply pipe (60), a first branch supply pipe (61), and a second branch supply pipe (62). One end of the main supply pipe (60) is connected to the condenser (71), and part of a liquid refrigerant that has been condensed in the condenser (71) flows in the main supply pipe (60). The other end of the main supply pipe (60) is connected to one end of each of the first branch supply pipe (61) and the second branch supply pipe (62). The other end of the first branch supply pipe (61) is in communication with the introduction passage (59) of the first bearing holder (51). The other end of the second branch supply pipe (62) is in communication with the introduction passage (59) of the second bearing holder (52). The main supply pipe (60) is provided with a first on-off valve (63). The first branch supply pipe (61) is provided with a second on-off valve (64) .

In the aforementioned configuration, when the second on-off valve (64) is opened with the first on-off valve (63) being open, the refrigerant is injected through the injection ports (57) of the first bearing holder (51) and the injection ports (57) of the second bearing holder (52) toward both of the first coil end (24) and the second coil end (25) of the electric motor (20). When the second on-off valve (64) is closed with the first on-off valve (63) being open, the refrigerant is injected through the injection ports (57) of the second bearing holder (52) toward the second coil end (25) of the electric motor (20). When the first on-off valve (63) is closed, both of the injection ports (57) of the first bearing holder (51) and the injection ports (57) of the second bearing holder (52) are in a state in which the refrigerant is not injected therethrough. As described above, the injection amount of the refrigerant through the injection ports (57) of each of the bearing holders (51, 52) is adjustable individually.

A collection pipe (65) is connected to the casing (11) and the condenser (72) of the refrigerant circuit. The liquid refrigerant that has been injected through each of the injection ports (57) is collected from the inside of the casing (11) into the condenser (72) through the collection pipe (65).

### <Control Unit>

To cause the position of the drive shaft (26) to be a desired position, the control unit (91) outputs a power command value for controlling electric power that is to be supplied to the magnetic bearings (40), on the basis of a value detected by a gap sensor (not illustrated) capable of detecting a gap between the rotor (41) and the stator (42) of each magnetic bearing (40). For example, the control unit (91) includes a microcomputer (93) that is mounted on a control board, and a memory device (94) that stores software for causing the microcomputer to operate. The control unit (91) is connected to a temperature sensor, a gap sensor, and the like provided in the turbo compressor (10) and controls the operation of the turbo compressor (10).

### <Power Source Unit>

The power source unit (92) supplies electric power to the magnetic bearings (40) on the basis of a power command value from the control unit (91). For example, the power source unit (92) can be constituted by a PWM (Pulse Width Modulation) amplifier.

### - Operation Action of Turbo Compressor -

An operation action of the turbo compressor (10) will be described. When electric power is supplied to the electric motor (20), the rotor (22) of the electric motor (20) rotates, thereby rotating the drive shaft (26) and the impeller (30). Rotation of the impeller (30) causes the refrigerant to be taken from the intake pipe (12) into the impeller space (16) and compressed. The compressed refrigerant is discharged from the impeller space (16) through the discharge pipe (13). The refrigerant discharged from the turbo compressor (10) circulates in a refrigerant circuit (70) and performs a refrigeration cycle operation of radiating heat in the condenser (71) and absorbing heat in the evaporator (72).

### - Operation of Cooling Coil of Electric Motor -

An operation of cooling the coil of the electric motor (20) will be described.

In Embodiment 1, when the temperature of the coil of the electric motor (20) has risen to a predetermined value, an operation of cooling the coil by injecting a liquid refrigerant to the coil ends (24, 25) is performed. Therefore, as described above, the turbo compressor (10) is provided with, although not illustrated, a temperature sensor that detects the temperature of the coil.

### <First Cooling Operation>

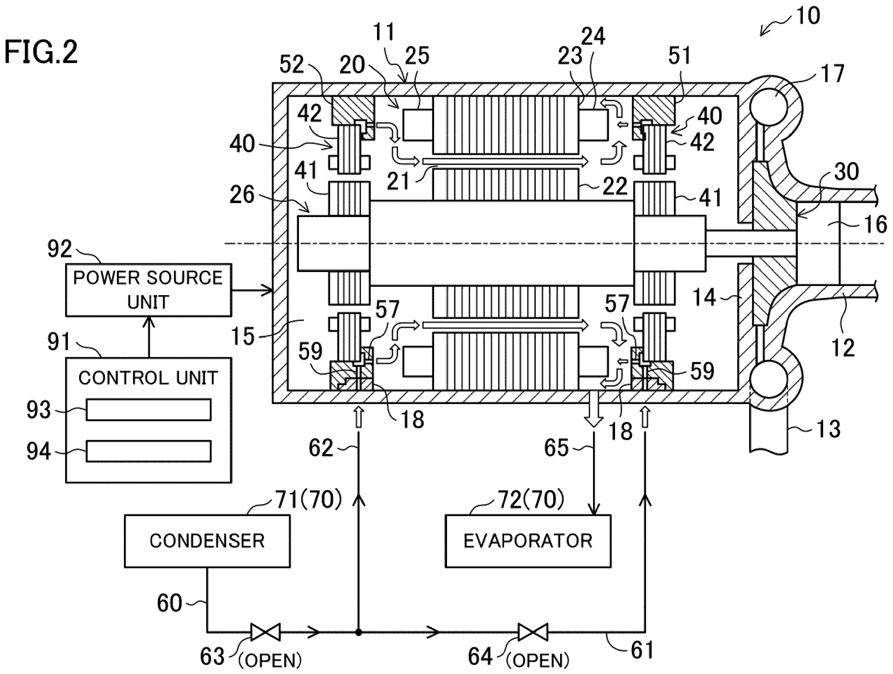

When the temperatures of both of the first coil end (24) and the second coil end (25) have reached a predetermined value, a first cooling operation illustrated in Fig. 2 is performed. In the first cooling operation, both of the first on-off valve (63) and the second on-off valve (64) are opened. As a result of this, the liquid refrigerant flows, as illustrated in Fig. 2, from the condenser (71) into the main supply pipe (60). The liquid refrigerant further flows into the first branch supply pipe (61) and the second branch supply pipe (62). The liquid refrigerant flows into the annular grooves (58) of the refrigerant passages (56) from the introduction passages (59) of the first bearing holder (51) and the second bearing holder (52) and fills the entirety of the annular grooves (58).

Since the refrigerant flows additionally into the annular groove (58), an excess refrigerant is injected through both of the injection ports (57) of the first bearing holder (51) and the injection ports (57) of the second bearing holder (52). The refrigerant injected through the injection ports (57) is sprayed onto the coil ends (24, 25). As a result of the liquid refrigerant being sprayed onto the coil ends (24, 25), the coil of the electric motor (20) is cooled.

The refrigerant sprayed onto the first coil end (24) passes through the collection pipe (65) and is introduced into the evaporator (72). The refrigerant sprayed onto the second coil end (25) passes through the air gap (21), joins the refrigerant injected from the first coil end (24), passes through the collection pipe (65), and is introduced into the evaporator (72). The refrigerant that has flowed into the evaporator (72) joins the refrigerant circulating in the refrigerant circuit (70), is taken from the intake pipe (12) into the turbo compressor (10), compressed in the impeller space (16), and discharged from the discharge pipe (13) .

### <Second Cooling Operation>

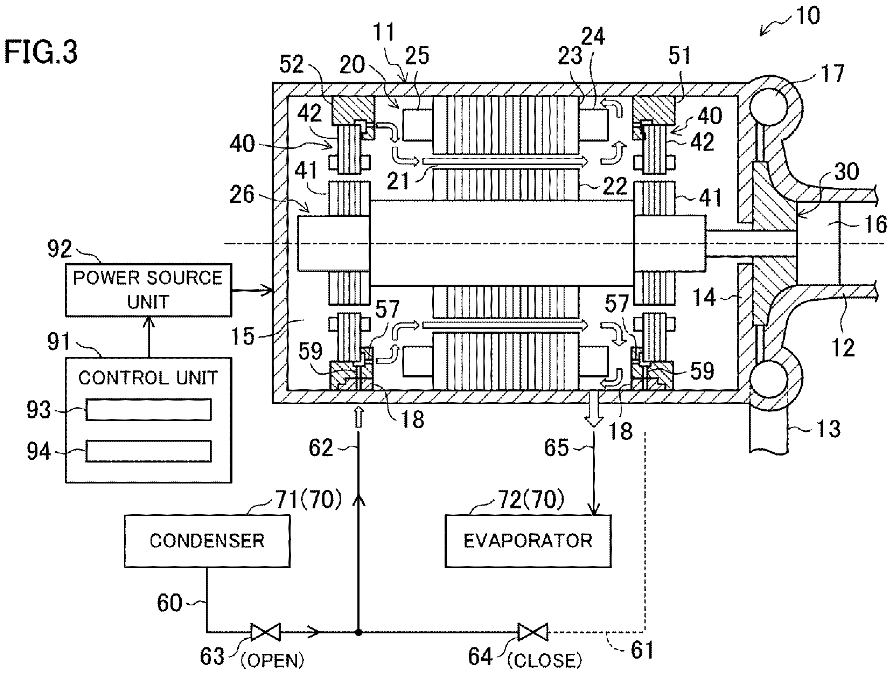

When the temperature of the second coil end (25) has reached a predetermined temperature while the temperature of the first coil end (24) has not reached a predetermined temperature, in other words, when only the second coil end (25) has a high temperature, a second cooling operation illustrated in Fig. 3 is performed. In the second cooling operation, the first on-off valve (63) is opened, and the second on-off valve (64) is closed. Consequently, as illustrated in Fig. 3, the liquid refrigerant flows from the condenser (71) into the main supply pipe (60) and further flows into the second branch supply pipe (62). The liquid refrigerant does not flow in the first branch supply pipe (61) and thus is not supplied to the refrigerant passage (56) of the first bearing holder (51). The liquid refrigerant in the second branch supply pipe (62) flows into the annular groove (58) of the refrigerant passage (56) from the introduction passage (59) of the second bearing holder (52) and fills the entirety of the annular groove (58).

Since the refrigerant flows additionally into the annular groove (58), an excess liquid refrigerant is injected through the injection ports (57) of the second bearing holder (52). The refrigerant injected through the injection ports (57) is sprayed onto the second coil end (25). As a result of the liquid refrigerant being sprayed onto the second coil end (25), the coil of the electric motor (20) is cooled.

The refrigerant sprayed onto the second coil end (25) passes through the air gap (21), further passes through the collection pipe (65), and is introduced into the evaporator (72). The refrigerant that has flowed into the evaporator (72) joins the refrigerant circulating in the refrigerant circuit (70), is taken from the intake pipe (12) into the turbo compressor (10), compressed in the impeller space (16), and discharged from the discharge pipe (13).

### <Stoppage of Cooling Operation>

When each of the temperatures of the first coil end (24) and the temperature of the second coil end (25) has not reached a predetermined value, it is determined that cooling of the coil is unnecessary. In this case, the first on-off valve (63) is closed. As a result of this, the liquid refrigerant is not supplied from the condenser (71) to the refrigerant passages (56) of the bearing holders (51, 52). Therefore, spraying of the refrigerant from the bearing holders (51, 52) to the coil ends (24, 25) is not performed.

### - Effects in Embodiment 1 -

In Embodiment 1, the refrigerant passages (56) through which the refrigerant flows and the plurality of injection ports (57) through which the refrigerant is injected from the refrigerant passages (56) toward the coil ends (24, 25) of the electric motor (20) are formed in the bearing holders (51, 52), and the plurality of injection ports (57) are distributed in the circumferential direction of the bearing holders (51, 52).

Here, conventionally, a dedicated cooling member that faces a coil end is provided to spray a coolant onto the coil end from the cooling member. Therefore, a conventional configuration may be a complicated configuration because of the need of a dedicated cooling member. For example, when a cooling component having a complicated configuration in which a pipe and a nozzle are used, there is a likelihood of vibration, noise, or damage to the cooling component. In Embodiment 1, however, it is possible to suppress occurrence of such problems since the bearing holders (51, 52) are used as cooling components.

In Embodiment 1, the bearing holders (51, 52) are used to spray a refrigerant onto the coil ends (24, 25) of the electric motor (20). Thus, a dedicated cooling member is unnecessary, and it is possible to cool the coil of the electric motor (20) by a simple configuration.

Specifically, the refrigerant that flows in the refrigerant passages (56) of the bearing holders (51, 52) is injected toward the coil ends (24, 25) of the electric motor (20) through the plurality of injection ports (57) formed to be distributed in the circumferential direction of the bearing holders (51, 52). Due to the plurality of injection ports (57) being formed to be distributed in the circumferential direction, it is possible to spray the refrigerant onto the entirety of the coil ends (24, 25) of the electric motor (20). Therefore, according to Embodiment 1, it is possible to cool the coil ends (24, 25) uniformly and also possible to cool the entirety of the coil of the electric motor (20) by a simple configuration in which the plurality of injection ports (57) are merely formed in the bearing holders (51, 52) to be distributed in the circumferential direction.

In Embodiment 1, the plurality of injection ports (57) are formed in the bearing holders (51, 52) to be distributed in the circumferential direction, and the entirety of the coil of the electric motor (20) can be uniformly cooled. It is thus possible to save the amount of the refrigerant required for cooling.

In Embodiment 1, the refrigerant passages (56) and the injection ports (58) are simply formed in the bearing holders (51, 52), and a cooling component having a complicated shape is unnecessary. It is thus possible in Embodiment 1 to suppress a configuration for cooling the coil from becoming complicated. As a result, it is possible to suppress an increase in the costs of the turbo compressor (10) .

In Embodiment 1, bearings are the magnetic bearings (40), and the refrigerant passages (56) include the annular passages (58) each formed in an annular shape in the bearing holders (51, 52).

In this configuration, the refrigerant flows in the annular passages (58). Thus, a configuration capable of uniformly cooling the coil ends (24, 25) of the electric motor (20) can be easily realized. Moreover, due to the refrigerant passages (56) including the annular passages (58), it is possible to cool the entirety of the magnetic bearings (40).

In Embodiment 1, it is possible to individually adjust the injection amount of the refrigerant through the injection ports (57) of the first bearing holder (51) and the injection amount of the refrigerant through the injection ports (57) of the second bearing holder (52). Specifically, the main supply pipe (60) in communication with the refrigerant passage (56) of the second bearing holder (52) is provided with the first on-off valve (63), and the first branch supply pipe (61) in communication with the refrigerant passage (56) of the first bearing holder (51) is provided with the second on-off valve (64) so that the first on-off valve (63) and the second on-off valve (64) are individually opened and closed.

According to this configuration, as illustrated in Fig. 2 and Fig. 3, it is possible to perform the first cooling operation of injecting the refrigerant to both of the first coil end (24) and the second coil end (25) and the second cooling operation of injecting the refrigerant only to the second coil end (25). As described above, it is possible in Embodiment 1 to control injection of the refrigerant through the injection ports (57) of the bearing holders (51, 52) individually. It is thus possible to cool the coil of the electric motor (20) efficiently.

In Embodiment 1, as the refrigerant passages (56), the annular grooves (58) are formed at the corner portions on the sides of the retainer portions (50c) at the inner peripheral surfaces of the bearing holders (51, 52). As a result of the annular grooves (58) being formed at such positions, the annular grooves (58) also function as bit clearances for machining the inner peripheral surfaces of the bearing holders (51, 52). Thus, it is not necessary to form bit clearances separately and possible to suppress the configurations of the bearing holders (51, 52) from becoming complicated.

### - Modifications of Embodiment 1 -

As a modification of Embodiment 1 described above, the first on-off valve (63) of the main supply pipe (60) may be replaced with a first flow-rate regulating valve (not illustrated), and the second on-off valve (64) of the first branch supply pipe (61) may be replaced with a second flow-rate regulating valve.

In this configuration, the injection amount of the refrigerant injected through the injection ports (57) of the first bearing holder (51) is adjusted on the basis of a first temperature of the electric motor (20). As the first temperature of the electric motor (20), the temperature of the first coil end (24) of the electric motor (20) is used. The injection amount of the refrigerant injected through the injection ports (57) of the second bearing holder (52) is adjusted on the basis of a second temperature of the electric motor (20). As the second temperature of the electric motor (20), the temperature in the air gap (21) of the electric motor (20) or the temperature of the coil in a slot is used.

As described above, in the turbo compressor (10) according to the modification, the first temperature and the second temperature are temperatures of mutually different parts of the electric motor (20).

In this modification, the injection amount of the refrigerant from the second bearing holder (52) that cools the second coil end (25) of the electric motor (20) is adjusted on the basis of the temperature (of a gas) in the air gap (21) or the temperature of the coil in the slot.

When, as illustrated in Fig. 3, the refrigerant is sprayed onto only the second coil end (25), the temperature of the refrigerant that has passed through the air gap (21) may be increased, and the temperature of the first coil end (24) of the electric motor (20) may be thereby increased. In such a case, the injection amount of the refrigerant from the first bearing holder (52) is adjusted on the basis of the temperature of the first coil end (24). In other words, when a temperature increase of the first coil end (24) can be suppressed in addition to a temperature increase of the second coil end (25) only by injection of the refrigerant from the second bearing holder (52), injection of the refrigerant from the first bearing holder (51) is suppressed.

According to the present modification, the first temperature is the temperature of the first coil end (24) of the electric motor (20), the second temperature is the temperature in the air gap (21) of the electric motor (20) or the temperature of the coil in the slot, and the first temperature and the second temperature are the temperatures of mutually different parts of the electric motor (20).

Here, if the cooling operation is performed on the basis of only a position where the temperature is highest, some places may be excessively cooled, which decreases efficiency of the compressor by an amount of a waste refrigerant.

In contrast, in Embodiment 1, it is possible to appropriately adjust the amount of the refrigerant injected through the injection ports (57) of the first bearing holder (51) and the amount of the refrigerant injected through the injection ports (57) of the second bearing holder (52) on the basis of the temperatures of parts corresponding thereto and possible to suppress excessive cooling. It is thereby possible to reduce waste of the refrigerant for cooling and suppress a decrease in the efficiency of the compressor.

### <<Embodiment 2>>

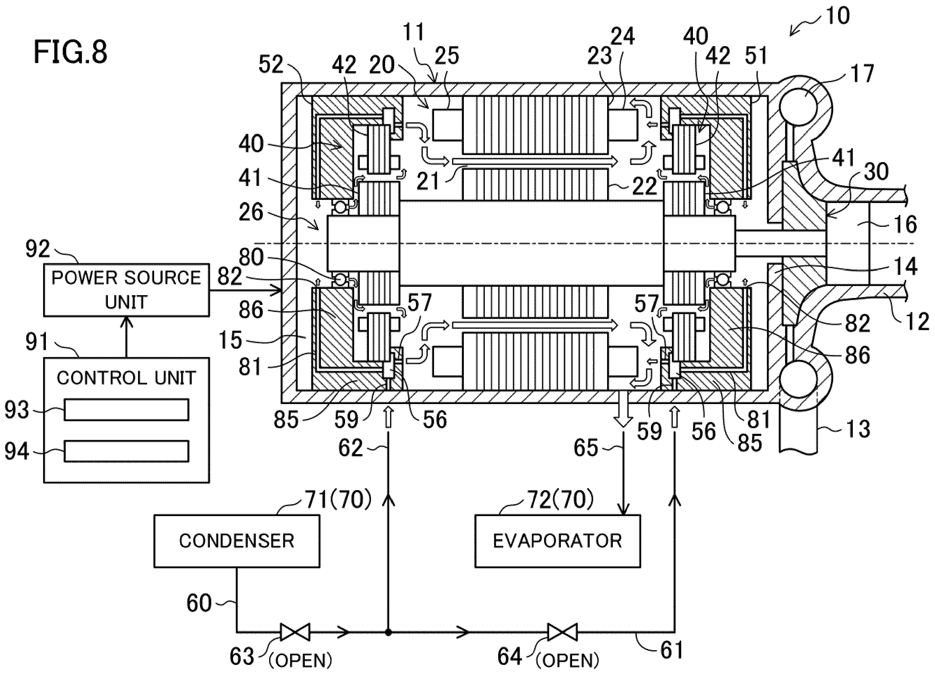

Embodiment 2 illustrated in Fig. 8 will be described. The turbo compressor (10) according to Embodiment 2 includes second bearings that are auxiliary bearings (80), in addition to the first bearings that are the magnetic bearings (40). The second bearings are so-called touchdown bearings (80) that support the drive shaft (26) when a malfunction or the like of the magnetic bearings (40) has occurred. As the touchdown bearings (80) according to Embodiment 2, rolling bearings (ball bearings) are used. The inner rings of the touchdown bearings (80) are not in contact with the drive shaft (26) in a state in which the magnetic bearings (40) function normally. When a malfunction or the like has occurred in the magnetic bearings (40), the inner rings and the drive shaft (26) are in contact with each other, and the touchdown bearings (80) function as bearings.

The bearing holders (51, 52) according to Embodiment 2 are an integral member including a first holding portion (85) that holds stators of the magnetic bearings (40) and a second holding portion (86) that holds the outer rings of the touchdown bearings (80). In the bearing holders (51, 52), branch passages (81) through which the refrigerant is supplied from the refrigerant passages (56) to the touchdown bearings (80) are formed. Open ends of the branch passages (81) are configured as second injection ports (82).

Although not illustrated in Fig. 8, the turbo compressor (10) according to Embodiment 2 is provided with a mechanism that causes the refrigerant injected through the second injection ports (82) to flow toward the electric motor (20). For example, thrust magnetic bearings (not illustrated) may be disposed between the magnetic bearings (radial magnetic bearings) (40) and the touchdown bearings (80) so that a centrifugal force that acts on a fluid in the thrust magnetic bearings can be used to cause the refrigerant injected through the second injection ports (82) to flow toward the coil of the electric motor (20).

Specifically, in each thrust magnetic bearing, an air gap between a stator and a rotor is a conical minute gap, and a force (centrifugal force) that sends a fluid present at the periphery from the small diameter side toward the large diameter side of the air gap acts. Thus, the thrust magnetic bearings are each disposed on the drive shaft (26) to be in an orientation in which the small diameter side of the air gap is directed to the touchdown bearings (80) and in which the large diameter side of the air gap is directed to the radial magnetic bearings (40) and the electric motor (20). With this configuration, a flow of a fluid that moves from the touchdown bearings (80) toward the electric motor (20) is generated, and a force in a direction moving along the flow acts also on the refrigerant.

In the first cooling operation in Embodiment 2, when the temperatures of both of the first coil end (24) and the second coil end (25) have reached a predetermined temperature, both of the first on-off valve (63) and the second on-off valve (64) are opened. As a result of this, the liquid refrigerant flows, as illustrated in Fig. 2, from the condenser (71) into the main supply pipe (60). The liquid refrigerant further flows into the first branch supply pipe (61) and the second branch supply pipe (62). The liquid refrigerant flows into the annular grooves (58) of the refrigerant passages (56) from the introduction passages (59) of the first bearing holder (51) and the second bearing holder (52) and fills the entirety of the annular grooves (58) .

Since the refrigerant flows additionally into the annular groove (58), an excess refrigerant is injected through both of the injection ports (57) of the first bearing holder (51) and the injection ports (57) of the second bearing holder (52). The refrigerant injected through the injection ports (57) is sprayed onto the coil ends (24, 25). As a result of the liquid refrigerant being sprayed onto the coil ends (24, 25), the coil of the electric motor (20) is cooled. The excess refrigerant in the annular grooves (58) flows also into the branch passages (81) and is injected through the second injection ports (82). The refrigerant injected through the second injection ports (82) cools the touchdown bearings (80), passes through the thrust magnetic bearings (not illustrated) and the radial magnetic bearings (40), and flows toward the coil ends of the electric motor (20).

The refrigerant sprayed onto the first coil end (24) passes through the collection pipe (65) and is introduced into the evaporator (72). The refrigerant sprayed onto the second coil end (25) passes through the air gap (21), joins the refrigerant injected from the first coil end (24), passes through the collection pipe (65), and is introduced into the evaporator (72). The refrigerant that has flowed into the evaporator (72) joins the refrigerant circulating in the refrigerant circuit (70), is taken from the intake pipe (12) into the turbo compressor (10), compressed in the impeller space (16), and discharged from the discharge pipe (13) .

In the second cooling operation for cooling the second coil end (25), the first on-off valve (63) is opened and the second on-off valve (64) is closed, thereby introducing the refrigerant into the refrigerant passage (56) of the second bearing holder (52). An operation thereafter is basically the same as the first cooling operation. Specific description thereof is omitted here.

According to Embodiment 2, it is possible to cool the touchdown bearings (80) in addition to obtain the effects in Embodiment 1. In a related art, for example, when the mass of a rotating system including the rotor (22) of the electric motor (20) and the rotor (41) of the magnetic bearings (40) is large and the rotational speed is high, as a counter measure for thermal expansion of the balls (rolling elements) of the touchdown bearings (80), the balls (rolling elements) may be required to be formed with expensive ceramic. In contrast, in Embodiment 2, it is possible to cool the touchdown bearings (80) and thus eliminate the need of a countermeasure for thermal expansion and possible to suppress a cost increase.

### <<Other Embodiments>>

The aforementioned embodiments may be configured as below.

For example, in Embodiments 1 and 2 described above, both of the first bearing holder (51) and the second bearing holder (52) are provided with the refrigerant passage (56) and the injection ports (57); however, a configuration in which at least one of the bearing holders (51, 52) is provided with the refrigerant passage (56) and the injection ports (57) may be employed. In this case, the second bearing holder (52) may be preferably provided with the refrigerant passage (56) and the injection ports (57).

In Embodiments 1 and 2 described above, the magnetic bearings (40) are used as the first bearings; however, the first bearings may be bearings other than magnetic bearings, such as rolling bearings or sliding bearings.

In Embodiments 1 and 2 described above, the refrigerant is to be injected onto the coil ends (24, 25) of the electric motor (20); however, it may be configured such that, instead of the liquid refrigerant, a gas refrigerant is injected onto the coil ends (24, 25).

In Embodiments 1 and 2 described above, the annular grooves (58) are formed as the refrigerant passages (56) in the bearing holders (51, 52); however, passages other than annular grooves may be formed in the bearing holders (51, 52) provided that the passages are in communication with the plurality of injection ports (57) formed in the bearing holders (51, 52) to be distributed in the circumferential direction.

In Embodiments 1 and 2 described above, the injection ports (57) are passages extending in the axial direction of the drive shaft (26); however, the direction of the injection ports (57) may be changed in accordance with the shapes of the bearing holders (51, 52) and the positions of the coil ends (24, 25).

In Embodiment 1, the injection amount of the refrigerant through the injection ports (57) of the first bearing holder (51) and the injection amount of the refrigerant through the injection ports (57) of the second bearing holder (52) are adjustable individually; however, such a configuration is not necessarily employed, and the injection amount of the refrigerant through the injection ports (57) of the plurality of bearing holders (51, 52) may be adjusted on the basis of a temperature of a portion of the electric motor (20).

Although embodiments and a modification have been described above, it should be understood that various changes in the forms and the details are possible without departing from the gist and the scope of the claims. The embodiments and the modification above may be combined and replaced, as appropriate, as long as the directed functions of the present disclosure are not lost.

### Industrial Applicability

As described above, the present disclosure is useful for a turbo compressor.

### Reference Signs List

- 10: turbo compressor
- 20: electric motor
- 24: first coil end
- 25: second coil end
- 26: drive shaft
- 30: impeller
- 40: magnetic bearing (bearing)
- 51: first bearing holder
- 52: second bearing holder
- 56: refrigerant passage
- 57: injection port
- 58: annular groove (annular passage)
- 70: refrigerant circuit

## Claims

1. A turbo compressor comprising: an impeller (30); an electric motor (20); a drive shaft (26) that is coupled to the impeller (30) and the electric motor (20); and at least one bearing holder (51, 52) that supports the drive shaft (26) via a first bearing (40), the turbo compressor being configured to be provided in a refrigerant circuit (70) in which a refrigeration cycle is performed and compress a refrigerant,
wherein the bearing holder (51, 52) includes a refrigerant passage (56) through which a refrigerant flows, and a plurality of injection ports (57) through which a refrigerant is injected from the refrigerant passage (56) toward a coil end (24, 25) of the electric motor (20), and
the injection ports (57) are distributed in a circumferential direction of the bearing holder (51, 52).

2. The turbo compressor according to claim 1,
wherein the first bearing is a magnetic bearing (40).

3. The turbo compressor according to claim 2, further comprising:
a second bearing (80) that is an auxiliary bearing of the magnetic bearing (40),
wherein a branch passage (81) through which a refrigerant is supplied from the refrigerant passage (56) to the second bearing (80) is formed in the bearing holder (51, 52) .

4. The turbo compressor according to any one of claims 1 to 3,
wherein the refrigerant passage (56) includes an annular passage (58) formed in an annular shape in the bearing holder (51, 52).

5. The turbo compressor according to any one of claims 1 to 4,
wherein the bearing holder (51, 52) includes a first bearing holder (51) on a side where the impeller (30) is disposed with respect to the electric motor (20), and a second bearing holder (52) on a side opposite to the first bearing holder (51) with respect to the electric motor (20), and
an injection amount of a refrigerant through the injection ports (57) of each of the bearing holders (51, 52) is adjustable individually.

6. The turbo compressor according to claim 5,
wherein an injection amount of a refrigerant through the injection ports (57) of the first bearing holder (51) is adjusted based on a first temperature of the electric motor (20),
an injection amount of a refrigerant through the injection ports (57) of the second bearing holder (52) is adjusted based on a second temperature of the electric motor (20), and
the first temperature and the second temperature are temperatures of mutually different parts of the electric motor (20).
